# EUROPÄISCHE PATENTSCHRIFT

(11) **EP 0 953 485 B1**
(45) Veröffentlichungstag und Bekanntmachung des Hinweises auf die Patenterteilung: **02.04.2003**
(21) Anmeldenummer: 99107444.4
(22) Anmeldetag: 27.04.1999
(51) Int. Cl.: B60R 21/22, B60N 2/42

(54) **Aufprall-Schutzvorrichtung**
Crash protecting device
Dispositif de protection en cas d'accident

(30) Priorität: 28.04.1998 DE 29807644 U
(43) Veröffentlichungstag der Anmeldung: 03.11.1999
(73) Patentinhaber: TRW Automotive Safety Systems GmbH, 63743 Aschaffenburg (DE)
(72) Erfinder: Kreuzer, Martin, 63839 Kleinwallstadt (DE)
(74) Vertreter: Degwert, Hartmut, Dipl.-Phys.

(56) Entgegenhaltungen:
- PATENT ABSTRACTS OF JAPAN vol. 097, no. 011, 28. November 1997 (1997-11-28) & JP 09 188215 A (TOYOTA MOTOR CORP), 22. Juli 1997 (1997-07-22)
- PATENT ABSTRACTS OF JAPAN vol. 097, no. 007, 31. Juli 1997 (1997-07-31) & JP 09 076867 A (MITSUBISHI MOTORS CORP), 25. März 1997 (1997-03-25)
- PATENT ABSTRACTS OF JAPAN vol. 098, no. 011, 30. September 1998 (1998-09-30) & JP 10 152010 A (TOYOTA MOTOR CORP), 9. Juni 1998 (1998-06-09)

## Beschreibung

Die Erfindung betrifft eine Aufprall-Schutzvorrichtung für den Einbau in die Rückenlehne von Kraftfahrzeugsitzen mit einem Airbagmodul, das einen Gassack, einen Gasgenerator und eine Zündeinrichtung umfaßt, sowie mit einer die Einbauöffnung abdeckenden Kappe, die aus einer Schließposition in eine Öffnungsposition klappbar und in der Öffnungsposition ein ungehindertes Entfalten des Gassacks nach vorne ermöglicht.

Eine derartige Vorrichtung ist aus der JP-A-09 188 215 bekannt.

Derartige Aufprall-Schutzvorrichtungen können die Verletzungsgefahr der Fahrzeuginsassen bei einer Seitenkollision deutlich mindern, wenn der Gassack vollständig aufgeblasen ist, bevor der Insasse in einem Crashfall mit den Seitenteilen der Karosserie in Berührung kommt. Während die bei einem Frontalaufprall wirksamen Schutzvorrichtungen für Fahrer und Beifahrer innerhalb von 30 bis 60 ms aufgeblasen sein müssen, beträgt diese Zeit für Seitenairbags nur 10 bis 20 ms, weil der Reaktionsweg wesentlich kürzer ist. Je nach Art der Seitenkollision und der konstruktiven Ausbildung der beteiligten Karosserieteile besteht die Gefahr, daß die in den Fahrzeugraum eindringenden Seitenstrukturteile den Gassack in der Entfaltungsphase abklemmen und dadurch ein vollständiges Aufblasen verhindern. Dementsprechend wird die Schutzwirkung des Gassacks eingeschränkt.

Der Erfindung liegt die Aufgabe zugrunde, bei einer Aufprall-Schutzvorrichtung der eingangs genannten Art dafür zu sorgen, daß die vollständige Entfaltung des Gassacks nicht durch eindringende Seitenstrukturteile behindert werden kann, daß vielmehr der Gassack vollständig aufgeblasen ist, bevor es zu einer Berührung zwischen den Seitenstrukturteilen und dem Fahrzeuginsassen kommt.

Zur Lösung dieser Aufgabe wird erfindungsgemäß vorgeschlagen, daß die die Einbauöffnung für den Gassack abdeckende Kappe mechanisch verstärkt ausgebildet ist, aus einer im wesentlichen parallel zur Fahrzeuglängsachse ausgerichteten Schließposition in eine im wesentlichen senkrecht zur Fahrzeuglängsachse ausgerichtete Öffnungsposition klappbar ist und in der Öffnungsposition eine stabile Abstandshalterung zwischen der Rückenlehne des Fahrzeugsitzes und dem dieser gegenüberliegenden Bereich der Fahrzeugkarosserie bildet.

Die Rückenlehne von Kraftfahrzeugsitzen hat im Einbaubereich des Airbagmoduls eine Dicke von mehr als 100 mm, was die Anordnung einer Kappe mit einer Breite von wenigstens 70 bis 80 mm erlaubt. Wird diese Kappe erfindungsgemäß ausgebildet und so angeordnet, daß sie bei einer Aktivierung des Airbags quer zur Fahrzeuglängsrichtung ausgerichtet und arretiert ist, so kann sie als Abstandshalterung zwischen der Sitzlehne und den Seitenstrukturteilen der Karosserie zumindest so lange wirksam werden, bis der Gassack vollständig aufgeblasen ist. Außerdem wird auf diese Weise dem Eindringen der Seitenstrukturteile in den Passagierraum über die Sitzstruktur und deren Befestigung im Bodenbereich der Karosserie ein zusätzlicher Widerstand entgegengesetzt.

Zweckmäßige Ausgestaltungen des Erfindungsgedankens sind in den Unteransprüchen 2 bis 8 beschrieben. Weitere Einzelheiten werden anhand der in den Figuren 1 bis 3 dargestellten Ausführungsbeispiele näher erläutert. Es zeigen:
Fig. 1 eine schematische Ansicht der ausgeklappten Kappe von vorne,
Fig. 2 eine schematische Ansicht der ausgeklappten Kappe von oben, und
Fig. 3 ein konstruktives Ausführungsbeispiel der aufgeklappten Kappe in einem Horizontalschnitt.

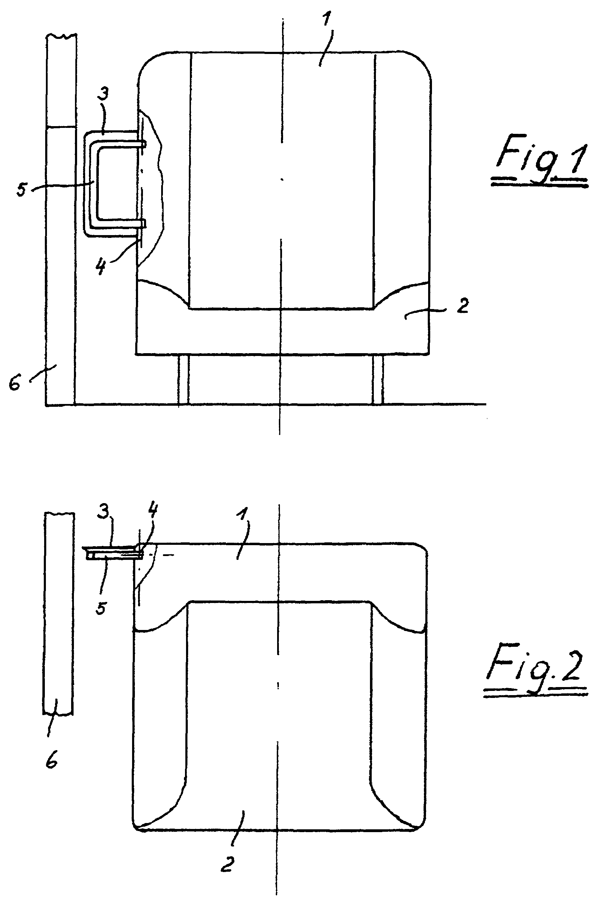

In der schematischen Darstellung gemäß Fig. 1 und 2 ist mit 1 die Rückenlehne eines Kraftfahrzeugsitzes 2 bezeichnet, in die ein nicht dargestelltes Airbagmodul integriert ist, dessen Einbauöffnung durch eine Kappe 3 abgedeckt ist. Diese Kappe 3 ist erfindungsgemäß um eine etwa parallel zur Hauptebene der Rückenlehne 1 verlaufende Klappachse 4 aus ihrer Schließposition in die dargestellte Öffnungsposition klappbar und durch Stege oder Rohrteile 5 mechanisch soweit verstärkt, daß sie eine ausreichend stabile Abstandshalterung zwischen Sitzlehne 1 und den gegenüberliegenden Karosserieteilen 6 bilden kann, die bei einem Seitenaufprall mehr oder weniger in den Passagierraum hineingedrückt werden können.

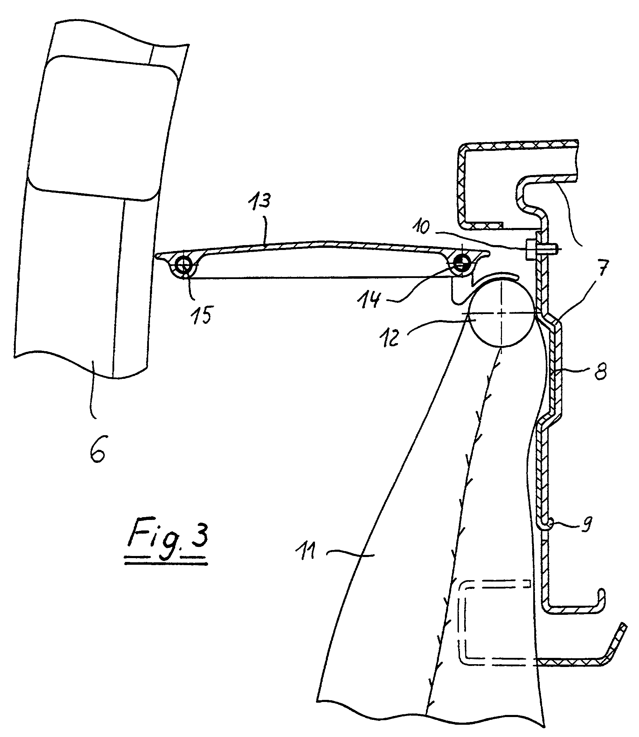

Bei dem konstruktiven Ausführungsbeispiel gemäß Fig. 3 sind von der Rückenlehne nur die tragenden, innenliegenden Rahmenbauteile 7 dargestellt. An diesem Rahmen ist das Basisblech 8 eines Airbagmoduls mittels vorderem Hakeneingriff 9 und Schraube 10 befestigt. Das Airbagmodul umfaßt einen Gassack 11 und einen Gasgenerator 12 mit nicht dargestellter Zündeinrichtung. Die Einbauöffnung für das Airbagmodul in der Seitenwand der Rückenlehne ist im Einbauzustand von einer Kappe 13 abgedeckt, die bei einer Aktivierung der Schutzvorrichtung um die Klappachse 14 in die dargestellte Position klappbar ist. Die Kappe 13 ist beim dargestellten Ausführungsbeispiel ein gießtechnisch hergestelltes Bauteil, das durch einen eingelegten Rohrrahmen 15 verstärkt ist. Alternativ oder zusätzlich können selbstverständlich gießtechnisch hergestellte Rippen oder dergl. vorgesehen werden, die sich zweckmäßigerweise parallel zur Hauptbeanspruchungsrichtung der Kappe 13 erstrecken. Mit 6 sind wiederum die Seitenstrukturteile der Karosserie bezeichnet, die der Einbauöffnung für das Airbagmodul in der Rückenlehne gegenüberliegen. Bei in Fahrzeuglängsrichtung verschieblich angeordneten Vordersitzen ist das ein Bereich in der Nähe der B-Säule, die für die Strukturfestigkeit der Karosserie bei einem Seitenaufprall von erheblicher Bedeutung ist. Wie bereits erwähnt, kann die aufgeklappte Kappe 13 einen Beitrag zur Karosseriesteifigkeit liefern, weil die Kräfte, die ein Eindringen der Seitenstrukturteile verursachen, zumindest teilweise über die Kappe 13 und die Rahmenbauteile des Sitzes in die Bodenplatte der Fahrzeugkarosserie abgeleitet werden können.

Unabhängig davon, ob dabei auch die Rahmenbauteile 7 des Sitzes verformt werden, sorgt die aufgeklappte Kappe 3 bzw. 13 dafür, daß sich der Gassack 11 ungehindert entfalten kann, bevor Seitenstrukturteile der Karosserie in den Fahrgastraum eindringen und den noch nicht vollständig aufgeblasenen Gassack abklemmen können.

## Patentansprüche

1. Aufprall-Schutzvorrichtung für den Einbau in die Rückenlehne (1) von Kraftfahrzeugsitzen (2) mit einem Airbagmodul, das einen Gassack, einen Gasgenerator und eine Zündeinrichtung umfaßt, sowie mit einer die Einbauöffnung abdeckenden Kappe (3; 13), die aus einer Schließposition in eine Öffnungsposition klappbar und in der Öffnungsposition ein ungehindertes Entfalten des Gassacks nach vorne ermöglicht, **dadurch gekennzeichnet, daß** die Kappe (3; 13) mechanisch verstärkt ausgebildet ist, die Schließposition im wesentlichen parallel zur Fahrzeuglängsachse ausgerichtet und die Öffnungsposition im wesentlichen senkrecht zur Fahrzeuglängsachse ausgerichtet ist und die Kappe (3; 13) in der Öffnungsposition eine stabile Abstandshalterung zwischen der Rückenlehne (1) des Fahrzeugsitzes (2) und einem der Rückenlehne (1) gegenüberliegenden Bereich der Fahrzeugkarosserie (6) bildet.

2. Aufprall-Schutzvorrichtung nach Anspruch 1, **dadurch gekennzeichnet, daß** die Kappe (3; 13) in der Öffnungsposition selbstarretierend gehalten ist.

3. Aufprall-Schutzvorrichtung nach einem der Ansprüche 1 oder 2, **dadurch gekennzeichnet, daß** die Kappe (3; 13) senkrecht zur Klappachse (4) eine Breite aufweist, die 60 bis 90, vorzugsweise 70 bis 80% der Dicke der Rückenlehne (1) im Einbaubereich entspricht.

4. Aufprall-Schutzvorrichtung nach Anspruch 3, **dadurch gekennzeichnet, daß** die Klappachse (4) etwa parallel zur Hauptebene der Rückenlehne (1) angeordnet ist.

5. Aufprall-Schutzvorrichtung nach einem der Ansprüche 1 bis 4, **dadurch gekennzeichnet, daß** die Kappe (3) aus einem stabilen Blechteil besteht, das außen mit einer an die Einbauumgebung angepaßten Deckschicht versehen ist.

6. Aufprall-Schutzvorrichtung nach Anspruch 5, **dadurch gekennzeichnet, daß** die Kappe (3) durch Stege oder Rohrteile (5) verstärkt ist.

7. Aufprall-Schutzvorrichtung nach einem der Ansprüche 1 bis 4, **dadurch gekennzeichnet, daß** die Kappe (13) aus einem gießtechnisch hergestellten Bauteil mit einstöckig angeformten Rippen oder dergl. besteht, das mit einer an die Einbauumgebung angepaßten Deckschicht versehen ist.

8. Aufprall-Schutzvorrichtung nach einem der Ansprüche 5 bis 7, **dadurch gekennzeichnet, daß** die Scharnier- und Arretierteile der Kappe (3; 13) in der Rückenlehne (1) versenkt angeordnet sind.

## Claims

1. An impact protection device for installation in the backrest (1) of a motor vehicle seat (2), comprising an air bag module including a gas bag, an inflator and an ignition device, and comprising a cap (3; 13) covering the installation opening, capable of being hinged from a closed position to an opened position and permitting in the opened position unobstructed forward deployment of the gas bag, **characterized in that** the cap (3; 13) is configured mechanically reinforced, that the closed position is oriented substantially parallel to the longitudinal axis of the vehicle and the opened position is oriented substantially perpendicular to the longitudinal axis of the vehicle, and that the cap (3; 13) forms in the opened position a stable spacing means between the backrest (1) of the vehicle seat (2) and a portion of the vehicle body (6) opposite the backrest (1).

2. The impact protection device as set forth in claim 1, **characterized in that** the cap (3; 13) is held self-arrestingly in the opened position.

3. The impact protection device as set forth in either of claims 1 or 2, **characterized in that** perpendicular to the hinging axis (4) the cap (3; 13) has a width corresponding to 60 to 90%, preferably 70 to 80% of the thickness of the backrest (1) in the installation area.

4. The impact protection device as set forth in claim 3, **characterized in that** the hinging axis (4) is arranged roughly parallel to the main plane of the backrest (1).

5. The impact protection device as set forth in any of claims 1 to 4, **characterized in that** the cap (3) consists of a stable sheet-metal part externally provided with a covering layer matching the installation surroundings.

6. The impact protection device as set forth in claim 5, **characterized in that** the cap (3) is reinforced by webs or tubular parts (5).

7. The impact protection device as set forth in any of claims 1 to 4, **characterized in that** the cap (13) consists of a component produced by a casting technique having integrally formed ribs or the like and provided with a covering layer matching the installation surroundings.

8. The impact protection device as set forth in any of claims 5 to 7, **characterized in that** the hinge and arresting parts of the cap (3; 13) are arranged so as to be embedded in the backrest (1).

## Revendications

1. Dispositif de protection contre les chocs destiné à être monté dans le dossier (1) de sièges (2) de véhicules, comportant un module d'airbag comprenant un coussin à gaz, un générateur de gaz et un dispositif d'amorçage, ainsi qu'un couvercle (3 ; 13) recouvrant l'ouverture de montage, qui peut être rabattu depuis une position de fermeture jusque dans une position d'ouverture et qui dans la position d'ouverture, permet un déploiement sans entrave du coussin à gaz vers l'avant, **caractérisé en ce que** le couvercle (3 ; 13) est réalisé avec renforcement mécanique, la position de fermeture est orientée sensiblement parallèlement à l'axe longitudinal du véhicule, et le couvercle (3, 13) forme dans la position d'ouverture un écarteur stable entre le dossier (1) du siège (2) du véhicule et une zone de la carrosserie (6), opposée au dossier (1).

2. Dispositif de protection contre les chocs selon la revendication 1, **caractérisé en ce que** le couvercle (3 ; 13) est maintenu autobloquant dans la position d'ouverture.

3. Dispositif de protection contre les chocs selon l'une des revendications 1 ou 2, **caractérisé en ce que** le couvercle (3 ; 13) présente perpendiculairement à l'axe de rabattement (4) une largeur qui correspond à 60 à 90 %, de préférence 70 à 80 % de l'épaisseur du dossier (1) dans la zone de montage.

4. Dispositif de protection contre les chocs selon la revendication 3, **caractérisé en ce que** l'axe de rabattement est agencé approximativement parallèle au plan principal du dossier (1).

5. Dispositif de protection contre les chocs selon l'une des revendications 1 à 4, **caractérisé en ce que** le couvercle (3) est constitué par une tôle stable qui est pourvue sur l'extérieur d'une couche de recouvrement adaptée au montage environnant.

6. Dispositif de protection contre les chocs selon la revendication 5, **caractérisé en ce que** le couvercle (3) est renforcé par des traverses ou par des tubulures (5).

7. Dispositif de protection contre les chocs selon l'une des revendications 1 à 4, **caractérisé en ce que** le couvercle (13) est constitué par un composant réalisé par technique de fonderie avec des nervures formées d'un seul tenant, ou similaires, lequel est pourvu d'une couche de recouvrement adaptée au montage environnant.

8. Dispositif de protection contre les chocs selon l'une des revendications 5 à 7, **caractérisé en ce que** les parties de charnière et de blocage du couvercle (3 ; 13) sont agencées de manière à s'encastrer dans le dossier (1).
